# EUROPEAN PATENT SPECIFICATION

(11) **EP 1 018 618 B1**
(45) Date of publication and mention of the grant of the patent: **26.05.2004**
(21) Application number: 99204616.9
(22) Date of filing: 30.12.1999
(51) Int. Cl.: F16L 55/033, F16L 3/10

(54) **Pipe-suspension bracket**
Aufhängungsschelle für ein Rohr
Collier de suspension pour un tuyau

(30) Priority: 08.01.1999 NL 1010985
(43) Date of publication of application: 12.07.2000
(73) Proprietor: Flamco B.V., 2802 AG Gouda (NL)
(72) Inventor: Kemper, Dimitri Wasil, 1106 BR Amsterdam (NL)
(74) Representative: Iemenschot, Johannes Andreas, Ir.

(56) References cited:
- CH-A- 278 700
- DE-A- 19 619 550
- DE-U- 9 011 327
- DE-U- 9 309 869

## Description

The invention relates to a pipe-suspension bracket according to the preamble of claim 1.

A bracket of this type is known from CH 278 700 A. In the known pipe-suspension bracket the first bracket part extends over an angle of approximately 180°. A second bracket part is connected to the first bracket part and completes the bracket.

The known pipe-suspension bracket has the drawback that, when it is fixed to a ceiling by means of the attachment means, the fitter will have to use both hands to fit a pipe in the bracket, one hand for holding the pipe in the first bracket part and the other hand for fixing the second bracket part.

The object of the present invention is to provide a pipe-suspension bracket of the abovementioned type which does not exhibit the abovementioned drawback and which makes it considerably easier to fit a pipe in the bracket.

This object is achieved by means of a pipe-suspension bracket according to claim 1.

With this pipe-suspension bracket, it is possible, after the first bracket part has been fixed to, for example, the ceiling, a support or the like, to introduce the pipe which is to be placed in the bracket via the bracket opening, after which the fitter can let go of the pipe and carry out other operations which are required.

Preferred embodiments of the pipe-suspension bracket according to the invention are defined in the dependent claims.

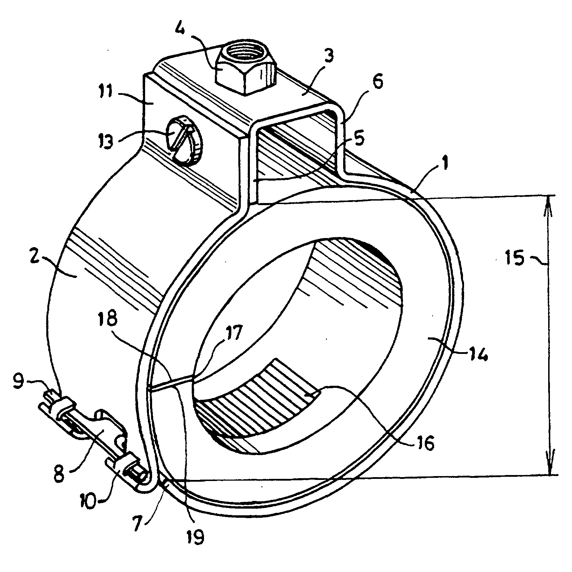

Hereinafter, the invention will be explained with reference to the drawing, in which the single figure is a perspective illustration of a preferred embodiment of the pipe-suspension bracket in a closed state.

The substantially annular pipe-suspension bracket which is shown in the drawing comprises a substantially hook-shaped first bracket part 1, which on a first end section is provided with an attachment means 4 for suspending the bracket from a ceiling, a support or the like. From the attachment means 4 the first bracket part 1 extends over an angle of more than 180° and preferably over an angle of between 200° and 250°. In practice, the angle will be between 220° and 230°. The attachment means 4 may, for example, be a welded-on nut into which a threaded rod can be screwed. However, the attachment means 4 may also be of a different form. The first end section of bracket part 1, to which the attachment means 4 is attached, is designed, in the embodiment illustrated, as a protuberance 3 which is directed outwards with respect to the bracket and is substantially U-shaped in cross section, the protuberance 3 comprising two substantially vertical legs 5, 6. In this case, the attachment means 4 is mounted on the connecting part between the legs 5, 6.

The pipe-suspension bracket shown in the drawing comprises a second bracket part 2 which by means of one end section is attached to that end section 7 of the first bracket part 1 which is opposite to the first end section, by means of a hinge 8. In the pipe-suspension bracket shown in the drawing, the hinge 8 is composed of a T-shaped end section of the end section 7 of the first bracket part 1, the legs 9 of the T-shaped end section being surrounded by folded-over lips 10 of the corresponding end section of the second bracket part 2. However, the hinge 8 may also be designed in some other way.

The second bracket part 2 is designed with a flange 11 which bears against the leg 5 of the U-shaped protuberance 3 of the first bracket part 1 when the bracket is closed. In order to close the pipe-suspension bracket shown in the drawing in a dimensionally stable manner, the bracket part 2 is designed with a drilled hole (not shown), and the leg 5 is designed with a drilled hole (not shown), so that the flange 11 can be fixed to the leg 5 by using a connecting means 13. The connecting means 13 may, for example, be a threaded bolt, in which case the drilled hole in the leg 5 is provided with a screw thread in order to receive the threaded bolt 13. Other components may also be used to form the connecting means 13. The design of the connecting means 13 is not limited to a threaded bolt.

On its inside, the substantially annular pipe-suspension bracket shown in the drawing is designed with a layer 14 of thermally insulating, vapour-tight material 14 and is intended to be used for suspending pipes for the transportion of cold media. The size of the layer 14 in the axial direction preferably substantially corresponds to the width of the bracket parts 1 and 2 in the axial direction. The layer 14 preferably consists of a flexible material. Consequently, in the open position of the bracket the layer 14 can simply be bent sideways, so that the pipe which is to be fitted can be placed in the open bracket via a bracket opening 15 which extends between the free end of the leg 5 and the end section 7 of the first bracket part 1, after which the layer 14 can be placed around the pipe, the bracket part 2 can be pivoted upwards and can be securely connected to the bracket part 1 with the aid of the connecting means 13. When the layer 14 is being fitted around the pipe which is to be fitted, a second end section 19 of the layer 14 is joined to a first end section 18 of the layer 14, for example by means of an adhesive.

In order to be able to absorb the compressive force imposed by a fitted pipe, the layer 14 is provided with a compression-resistant section 16 which is embedded in a thermally insulating and vapour-tight manner in the layer 14. The section 16 is positioned substantially diametrically opposite the attachment means 3, is substantially rectangular in shape and is matched to the annular shape of the bracket and the pipe which is to be fitted.

The layer 14 is preferably glued to the inside of the bracket part 1 at least in the area of the compression-resistant section 16.

## Claims

1. Pipe-suspension bracket having at least a first bracket part (1) which is provided with an attachment means (4) for suspending the bracket, the attachment means being attached to a first end section of the first bracket part **characterized in that** the first bracket part (1) extends over an angle of between 200° and 250° in the circumferential direction.

2. Pipe-suspension bracket according to claim 1, **characterized in that** the first bracket part (1) extends over an angle of between 200° and 250° in the circumferential direction.

3. Pipe-suspension bracket according to claim 1 or 2, **characterized in that** the first end section of the first bracket part (1) is in the form of a protuberance (3) which is directed outwards with respect to the bracket part and to which the attachment means (4) is attached.

4. Pipe-suspension bracket according to claim 3, **characterized in that** the outwardly directed protuberance (3) is substantially U-shaped in cross section.

5. Pipe-suspension bracket according to one of claims 1 - 4 **characterized in that** the bracket comprises a second bracket part (2) which, together with the first bracket part (1), is able to form a bracket which extends over an angle of substantially 360° in the circumferential direction.

6. Pipe-suspension bracket according to claim 5, **characterized in that** the second bracket part (2) is pivotably connected, by way of one end section, to that end section (7) of the first bracket part (1) which is opposite the first end section, and can be connected by way of its other end section, by means of a connecting means (13), to the first end section of the first bracket part (1).

7. Pipe-suspension bracket according to claim 5 or 6, **characterized in that** the first (1) and second (2) bracket parts are provided, on the inside, with a layer (14) of thermally insulating, vapour-tight material.

8. Pipe-suspension bracket according to claim 7, **characterized in that** the size of the layer (14) of thermally insulating and vapour-tight material in the axial direction of the bracket substantially corresponds to the width, in the axial direction, of the first bracket part (1).

9. Pipe-suspension bracket according to claim 7, **characterized in that** the layer (14) of thermally insulating and vapour-tight material comprises at least one compression-resistant support means (16) which is located substantially diametrically opposite the attachment means (4).

## Patentansprüche

1. Rohr-Aufhängungs-Klammer, die zumindest ein erstes Klammerteil (1) aufweist, welches mit einem Befestigungsmittel (4) zum Aufhängen der Klammer versehen ist, wobei das Befestigungsmittel an einem ersten Endbereich des ersten Klammerteils angebracht ist, **dadurch gekennzeichnet, daß** sich das erste Klammerteil (1) über einen Winkel zwischen 200° und 250° in die Umfangsrichtung erstreckt.

2. Rohr-Aufhängungs-Klammer nach Anspruch 1, **dadurch gekennzeichnet, daß** sich das erste Klammerteil (1) über einen Winkel zwischen 220° bis 230° in der Umfangsrichtung erstreckt.

3. Rohr-Aufhängungs-Klammer nach Anspruch 1 oder 2, **dadurch gekennzeichnet, daß** der erste Endabschnitt von dem ersten Klammerteil (1) die Form einer Ausstülpung (3) hat, welche bezüglich des Klammerteils nach außen gerichtet ist und an der das Befestigungsmittel (4) angebracht ist.

4. Rohr-Aufhängungs-Klammer nach Anspruch 3, **dadurch gekennzeichnet, daß** die nach außen gerichtete Ausstülpung (3) im Querschnitt im wesentlichen U-förmig ist.

5. Rohr-Aufhängungs-Klammer nach einem der Ansprüche 1 bis 4, **dadurch gekennzeichnet, daß** die Klammer ein zweites Klammerteil (2) umfaßt, welches zusammen mit dem ersten Klammerteil (1) eine Klammer ausbilden kann, welche sich im wesentlichen über einen Winkel von 360° in der Umfangsrichtung erstreckt.

6. Rohr-Aufhängungs-Klammer nach Anspruch 5, **dadurch gekennzeichnet, daß** das zweite Klammerteil (2) durch einen Endbereich schwenkbar mit demjenigen Endbereich (7) von dem ersten Klammerteil (1) verbunden ist, welcher dem ersten Endbereich gegenüber liegt, und durch seinen anderen Endbereich mittels eines Verbindungsmittels (13) mit dem ersten Endbereich von dem ersten Klammerteil (1) verbunden werden kann.

7. Rohr-Aufhängungs-Klammer nach Anspruch 5 oder 6, **dadurch gekennzeichnet, daß** die ersten (1) und zweiten (2) Klammerteile an der Innenseite mit einer Schicht (14) aus thermisch isolierendem, dampfdichtem Material vorgesehen sind.

8. Rohr-Aufhängungs-Klammer nach Anspruch 7, **dadurch gekennzeichnet, daß** die Größe der Schicht (14) aus thermisch isolierendem und dampfdichtem Material in der axialen Richtung der Klammer im wesentlichen der Breite von dem ersten Klammerteil (1) in axialer Richtung entspricht.

9. Rohr-Aufhängungs-Klammer nach Anspruch 7, **dadurch gekennzeichnet, daß** die Schicht (14) aus thermisch isolierendem und dampfdichtem Material zumindest ein druckresistentes Tragemittel (16) umfaßt, welches im wesentlichen diametral gegenüber zu dem Befestigungsmittel (4) angeordnet ist.

## Revendications

1. Collier de suspension pour un tuyau comprenant au moins un premier élément de collier (1) lequel est muni d'un moyen de fixation (4) pour suspendre le collier, ledit moyen de fixation pour suspendre le collier étant fixé à la première partie terminale du premier élément, **caractérisé en ce que** le premier élément du collier (1) se développe dans la direction circonférentielle sur un angle compris entre 200° et 250°.

2. Collier de suspension pour un tuyau selon la revendication 1, **caractérisé en ce que** le premier élément du collier (1) se développe dans la direction circonférentielle sur un angle compris entre 220° et 230°.

3. Collier de suspension pour un tuyau selon la revendication 1 ou 2, **caractérisé en ce que** la première partie terminale du premier élément du collier (1) se présente sous la forme d'une protubérance (3) qui est dirigée vers l'extérieur par rapport à l'élément de collier et à laquelle est fixé le moyen de fixation (4).

4. Collier de suspension pour un tuyau selon la revendication 3, **caractérisé en ce que** la protubérance (3) dirigée vers l'extérieur présente en section transversale une forme substantiellement en U.

5. Collier de suspension pour un tuyau selon l'une quelconque des revendications 1 à 4, **caractérisé en ce que** le collier comprend un second élément de collier (2) qui, conjointement avec le premier élément de collier (1), est en mesure de former un collier qui se développe dans la direction circonférentielle sur un angle substantiellement de 360°.

6. Collier de suspension pour un tuyau selon la revendication 5, **caractérisé en ce que** le second élément de collier (2) est relié de façon pivotante par l'une de ses parties terminales à la partie terminale (7) du premier élément (1) qui est opposée à la première partie terminale, et qui peut être fixée par son autre partie terminale, par l'intermédiaire d'un moyen de fixation (13), à la première partie terminale du premier élément de collier (1).

7. Collier de suspension pour un tuyau selon l'une des revendications 5 ou 6, **caractérisé en ce que** les premier (1) et second (2) éléments de collier sont munis, à leur intérieur, d'une couche de matériau isolant thermique et étanche à la vapeur.

8. Collier de suspension pour un tuyau selon la revendication 7, **caractérisé en ce que** la dimension de la couche (14) de matériau isolant thermique et étanche à la vapeur selon la direction axiale du collier correspond substantiellement à la largeur, selon la direction axiale, du premier élément (1) du collier.

9. Collier de suspension pour un tuyau selon la revendication 7, **caractérisé en ce que** la couche (14) de matériau isolant thermique et étanche à la vapeur comprend au moins un moyen de soutien résistant à la compression (16) qui est situé en un endroit substantiellement diamétralement opposé au moyen de fixation (4).
